# EUROPEAN PATENT SPECIFICATION

(11) **EP 1 933 032 B1**
(45) Date of publication and mention of the grant of the patent: **21.08.2013**
(21) Application number: 06821824.7
(22) Date of filing: 05.10.2006
(51) Int. Cl.: F04B 35/00

(54) **COMPRESSOR AND POWER TRANSMISSION DEVICE**
KOMPRESSOR UND LEISTUNGSÜBERTRAGUNGSVORRICHTUNG
COMPRESSEUR ET DISPOSITIF DE TRANSMISSION DE PUISSANCE

(30) Priority: 07.10.2005 JP 2005295022
(43) Date of publication of application: 18.06.2008
(73) Proprietor: Sanden Corporation, Isesaki-shi, Gunma 372-8502 (JP)
(72) Inventor: UCHIKADO, Iwao, Isesaki-shi, Gunma 3728502 (JP); IIZUKA, Jiro, Isesaki-shi, Gunma 3728502 (JP)
(74) Representative: Feldmeier, Jürgen
(86) International application number: PCT/JP2006/319989
(87) International publication number: WO 2007/043444

(56) References cited:
- EP-A1- 0 702 167
- JP-A- 02 066 324
- JP-A- 08 210 250
- JP-A- 2002 340 036
- US-A- 3 024 963

## Description

### TECHNICAL FIELD

The present invention relates to a compressor and a power transmission device which are suitable for a regrigeration device using CO₂ gas as refrigerant.

### BACKGROUND ART

A compressor of this type has a housing, which contains a compression unit. The compression unit carries out a sequence of processes, starting with suction of refrigerant, followed by compression and discharge of the refrigerant.

The compression unit is connected to a rotary shaft which drives the compression unit. The rotary shaft is disposed within the housing, and both end portions of the rotary shaft are rotatably supported by the housing through bearings. The rotary shaft has one end that is protruding from the housing. This one end is connected to a driving source through a power transmission path. Therefore, when the driving force of the driving source is transmitted through the power transmission path to the rotary shaft, the rotary shaft is rotated, and this rotation drives the compression unit.

For example, a power transmission device such as an electromagnetic clutch is also interposed in the power transmission path. The power transmission device controls the transmission of the driving force from the driving source to the compression unit.

Meanwhile, the housing is filled with the refrigerant, so that the pressure in the housing is increased while the compression unit is driven. In order to prevent the refrigerant from leaking out of the housing, the compressor further includes a shaft sealing unit, namely, mechanical seal, which is set in between the rotary shaft and the housing. The mechanical seal is placed near the bearing that is located on the side of the one end of the rotary shaft, and seals the rotary shaft with respect to the housing.

The mechanical seal includes a fixed seal face that surrounds the rotary shaft and a movable seal face that rotates with the rotary shaft and slides against the fixed seal face. The mechanical seal receives high pressure in the housing on the fixed seal face. Such sealing effect of the mechanical seal is generally presented by the product of fluid pressure (P) applied to the fixed and movable seal faces and peripheral velocity (V) of the movable seal face, that is, a PV value.

If CO₂ gas is used as refrigerant as mentioned above, the CO₂ gas decreases burdens on the global environment as it has smaller global warming potential than chlorofluorocarbon (CFC) that is commonly used as refrigerant. In such a case, however, the compressor is required to compress CO₂ into a high-pressure range where the CO₂ comes into a super critical state. For this reason, during operation of the compressor, the pressure in the housing becomes approximately seven to ten times higher than the case in which CFC is used as refrigerant.

The above-mentioned pressure increase in the housing raises the PV value to exceed an allowable level of the mechanical seal. The seal faces of the mechanical seal are then liable to be worn early. As a result, the mechanical seal cannot stably confine the high-pressure CO₂ refrigerant in the housing for a long period. This produces the possibility that the CO₂ refrigerant will leak out of the housing while the compressor is used.

To prevent the leakage of the CO₂ refrigerant by using the mechanical seal, it is necessary to decrease the PV value of the mechanical seal to the allowable level. To this end, the peripheral velocity (V) of the movable seal face is reduced. In this case, to be more specific, the diameter of the rotary shaft may be reduced.

Meanwhile, when the power transmission device is an electromagnetic clutch, this electromagnetic clutch includes a rotor located on the driving source side and an armature located on the rotary shaft side. The rotor and the armature must be spaced away from each other with a given gap between them when the electromagnetic clutch is in a resting state (refer to gap α disclosed in Patent Document 1 mentioned below).

In order to secure this gap, a ring-shaped shim is utilized. The shim is placed between the rotary shaft and the hub of the electromagnetic clutch. More specifically, one end portion of the rotary shaft is formed as a small-diameter shaft portion, which provides the rotary shaft with an annular stepped face that is opposed to the hub. When placed between the hub and the stepped face, the shim creates the gap between the rotor and the armature.

However, if the diameter of the rotary shaft is reduced to decrease the PV value of the mechanical seal, and moreover the one end portion of the rotary shaft is formed into the small-diameter shaft portion to provide the stepped face, the rotary shaft will be deficient in mechanical strength at the small-diameter shaft portion, and will be incapable of carrying out a stable transmission of the driving force, or torque transmission, from the driving source to the compression unit. This might result in a fracture of the rotary shaft.
Patent Document 1: Unexamined Japanese Patent Publication No. 8-74885

Publication of the European Patent Application EP-A-0 702 167 discloses a compressor with a housing and a drive shaft supported in the housing. The drive shaft is driven by a rotational power transmission device and, in turn, it drives a swash plate of a compression unit. The power transmission device comprises the features of the power transmission device of the preamble of claim 1.

Also, US-Patent US 3,024,963 discloses a compressor according to the preamble of claim 1, the power transmission device of which including a rotor, a hub and a clutch mechanism with two rotation members for transmitting rotational force assisted by spreader ball means which serve to cam the rotation members into clutching engagement.

### DISCLOSURE OF THE INVENTION

It is an object of the present invention to provide a compressor and a power transmission device which secures durability of a shaft sealing unit while avoiding the lack of strength of a rotary shaft even when CO₂ is used as a working fluid.

In order to accomplish the above object, in an aspect the compressor comprises a housing; a rotary shaft rotatably supported in the housing, the rotary shaft having one end protruding from the housing; a compression unit contained in the housing, the compression unit for performing a sequence of processes, starting with suction of a working fluid, followed by compression and discharge of the working fluid, when driven by the rotary shaft; a shaft sealing unit disposed between the housing and the rotary shaft, for airtightly sealing the inside of the housing; and a power transmission device for transmitting a driving force from a driving source to the one end of the rotary shaft.

The power transmission device includes a rotor rotatably supported by an outer surface of the housing through a bearing, for receiving the driving force from the driving source; a hub coupled to the one end of the rotary shaft, for rotating with the rotary shaft; a clutch mechanism for controlling transmission of rotational force from the rotor to the hub, the clutch mechanism including a first rotation member disposed adjacent to the rotor in relation to an axial direction of the rotary shaft, the first rotation member being capable of receiving the rotational force of the rotor and a second rotation member disposed adjacent to the hub in relation to the axial direction, the second rotation member being coupled to the hub and capable of receiving the rotational force of the first rotation member; and a shim sandwiched between the second rotation member and the hub, the shim determining a position of the first rotation member with respect to the rotor relative in the axial direction.

In the above compressor, the shim is placed not between the hub and the rotary shaft but between the hub and the second rotation member. Therefore, the rotary shaft is not required to be reduced in diameter due to the placement of the shim. The diameter of the rotary shaft can be reduced only in consideration of use of CO₂ gas as a working fluid, so that the diameter of the rotary shaft is not undesirably reduced. This makes it possible to secure durability of a shaft-sealing unit for a long term while avoiding the lack of mechanical strength in the rotary shaft, thereby significantly improving reliability of the compressor.

To be concrete, the power transmission device is an electromagnetic clutch including an electromagnetic solenoid disposed within the rotor. In this case, the first rotation member of the clutch mechanism includes an armature for receiving the rotational force of the rotor when the electromagnetic solenoid is in an operating state and the armature is attracted to the rotor by the electromagnetic solenoid, and a spring element for urging the armature to secure a gap between the rotor and the armature in the axial direction, when the electromagnetic solenoid is in a resting state, the shim determining a size of the gap.

The power transmission device may be a torque limiter for breaking transmission of the rotational force from the rotor to the rotary shaft when the rotary shaft comes into a locked state. In this case, the shim is used for position adjustment of the spring element and the rotor.

No matter whether the power transmission device is the electromagnetic clutch or the torque limiter, the shim located between the hub and the second rotation member can have a larger pressure-receiving area than that of a shim located between the hub and the rotary shaft. Consequently, the shim is never buckled at the time of screw fastening for fixing the hub. Abrasion of the shim due to a tremor caused by variable load is also reduced.

The clutch mechanism further includes a fastening element disposed in either one of the second rotation member and the hub, and a receiving element disposed in the other of the second rotation member and the hub, for receiving the fastening element to couple the second rotation member and the hub to each other. In this case, the shim has a bore into which the fastening element is inserted. More specifically, the fastening element is any one of a bolt, a pin, and a protruding portion integrally formed in one or the other of the second rotation member and the hub.

The fastening element and the receiving element easily and firmly couple the second rotation member and the hub to each other, and are greatly useful for improving the productivity of the compressor.

The invention also provides the compressor using CO₂ gas as a working fluid and the power transmission device included in the compressor.

### BRIEF DESCRIPTION OF THE DRAWINGS

FIG. 1 is a sectional view showing a part of a compressor according to a first embodiment;
FIG. 2 is a sectional exploded view showing a part of a power transmission device of FIG. 1;
FIG. 3 is a front view of the power transmission device of FIG. 1;
FIG. 4 is a front view of a hub of FIG. 2;
FIG. 5 is a front view of a shim of FIG. 2;
FIG. 6 is a sectional view showing a part of a compressor according to a second embodiment;
FIG. 7 is a sectional view showing a part of a compressor according to a third embodiment;
FIG. 8 is a front view of a power transmission device of FIG. 7;
FIG. 9 is a front view of a shim of FIG. 7; and
FIG. 10 is a sectional view showing a modification example of a coupling structure for connecting an inner support and the hub of FIG. 2 to each other.

### BEST MODE OF CARRYING OUT THE INVENTION

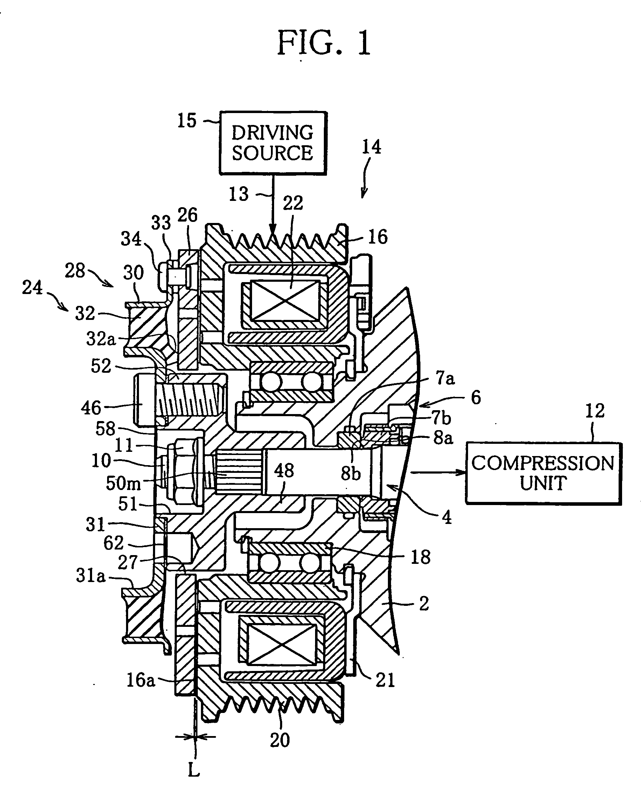

FIG. 1 shows a part of a compressor according to a first embodiment. The compressor is contained in a regrigeration device using CO₂ as refrigerant. More specifically, the refrigeration plat is included in a vehicle airconditioning system.

The compressor has a housing 2. FIG. 1 only shows a part of the housing 2. In the housing 2, there is disposed a rotary shaft 4, which is rotatably supported through bearings (not shown) with respect to the housing 2.

A mechanical seal 6 serving as a shaft sealing unit is also located in the housing 2. The mechanical seal 6 keeps an airtight condition between the housing 2 and the rotary shaft 4. More specifically, the mechanical seal 6 includes a sheet 7a fixed to the housing 2 and a seal ring 7b fitted to the rotary shaft 4 and pressed against the sheet 7a. The sheet 7a and the seal ring 7b have annular seal faces 8a and 8b that are in close contact.

Instead of the mechanical seal 6, lip seals (not shown) may be utilized as the shaft sealing unit. The lip seal is placed between the rotary shaft 4 and the housing 2 and has a cylindrical seal face.

The rotary shaft 4 has one end portion 10 protruding from the housing 2 and the other end portion (not shown) that is positioned within the housing 2. The other end portion of the rotary shaft 4 is connected to a compression unit 12. The compression unit 12 is accommodated in the housing 2 and is driven by the rotary shaft 4. Specifically, the compression unit 12 is, for example, either one of a swashplate compression unit including a piston that makes a reciprocating motion according to the rotary shaft 4 and a scroll compression unit including a movable scroll that makes an orbiting motion according to the rotary shaft 4.

When driven, the compression unit 12 repeatedly performs a sequence of processes, starting with suction of CO₂ refrigerant, followed by compression and discharge of the CO₂ refrigerant, thereby circulating the CO₂ refrigerant through a refrigerant circuit of the regrigeration device.

As illustrated in FIG. 1, the one end portion 10 of the rotary shaft 4 is connected to a driving source 15 through a power transmission path 13. The driving source 15 is either an engine or motor of a vehicle. An electromagnetic clutch 14 serving as a power transmission device is interposed in the power transmission path 13. The electromagnetic clutch 14 is mounted on the compressor.

More specifically, the electromagnetic clutch 14 includes a rotor 16. The rotor 16 is rotatably supported by an outer circumferential surface of the housing 2 through a bearing 18. The rotor 16 has an end face 16a located on the side of the one end portion 10 of the rotary shaft 4, and is also formed as a driving pulley 20. The driving pulley 20 is connected to the power transmission path 13, more specifically, to an output pulley (not shown) of the driving source 15 through an endless driving belt (not shown). Accordingly, when a driving force is transmitted from the driving source 15 to the driving pulley 20, the driving pulley 20, or the rotor 16, is rotated in one direction.

The electromagnetic clutch 14 has a clutch mechanism 24. The clutch mechanism 24 will be described below in detail.

The clutch mechanism 24 includes an electromagnetic solenoid 22 located in the inside of the rotor 16. The electromagnetic solenoid 22 is fixed onto the outer circumferential surface of the housing 2 through a ring-shaped bracket 21.

The clutch mechanism 24 further includes a first rotation member, that is, a disc-shaped armature 26. The armature 26 is disposed opposed to the one end face 16a of the rotor 16. The armature 26 has a circular opening 27 in the center thereof. As illustrated in FIG. 1, when the electromagnetic clutch 14 is in a resting state, there is secured a given gap amount L between the armature 26 and the one end face 16a of the rotor 16.

The armature 26 is coupled to an inner support 31 serving as a second rotation member through a spring unit 28. The spring unit 28 is set in an outer surface of the armature 26, that is, in an opposite face to the rotor 16. The spring unit 28 has an outer ring 30 and a spring element 32 that is interfitted in the outer ring 30. The spring element 32 is made of synthetic rubber and formed to have a ring-like shape. As is apparent from FIG. 1, the spring element 32 integrally has a plurality of projections 32a in an inner circumference thereof. The projections 32a are arranged at regular intervals in a circumferential direction of the spring unit 28 and are in contact with the armature 26.

The outer ring 30 is made of metal and integrally has three lugs 33 in an outer circumference thereof. The lugs 33 are arranged at regular intervals in a circumferential direction of the outer ring 30, and fixed on the armature 26 by using rivets 34. The spring unit 28 is accordingly coupled to the armature 26 in an outer circumferential portion thereof. FIG. 1 shows only one of the lugs 33 and one of the rivets 34.

The inner support 31 is made of metal and has a disclike shape. The inner support 31 has a rim 31a in an outer circumference thereof. The rim 31a bears the spring element 32 in consort with the outer ring 30 so that the spring element 32 is sandwiched between the rim 31a and the outer ring 30, and is fixed on the spring element 32. In short, the inner support 31 is coupled to the armature 26 serving as the first rotation member with the spring unit 28 intervening therebetween.

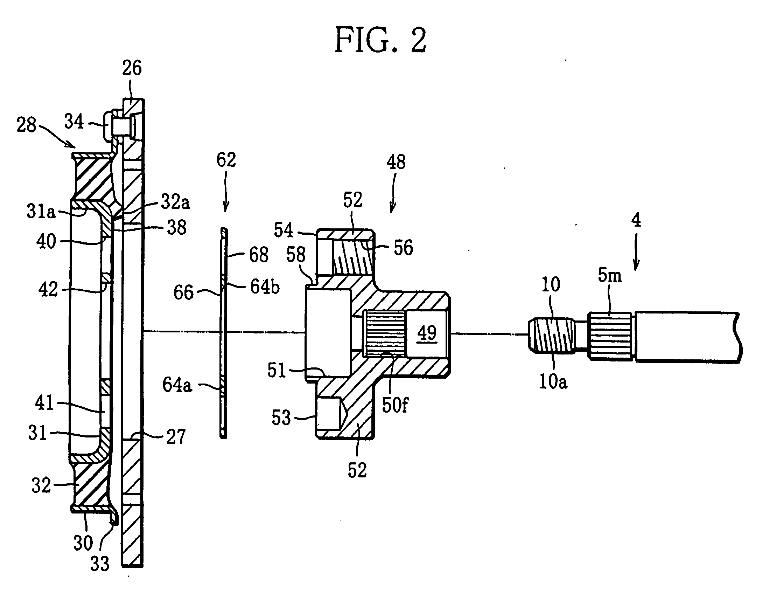

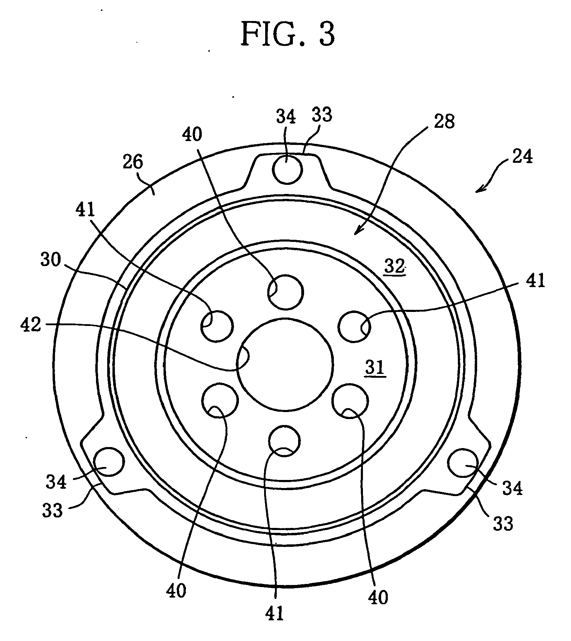

The inner support 31 is fitted to a hub 48 in an inner circumferential portion thereof. The hub 48 is mounted on the one end portion 10 of the rotary shaft 4. More concretely, as illustrated in FIGS. 2 and 3, the inner support 31 has a circular opening 42 positioned in the center thereof and three bores 40 arranged outside the opening 42. The bores 40 are distributed on the same circle and arranged at regular intervals in a circumferential direction of the inner support 31. The inner support 31 further has three bores 41. The bores 41 are arranged in the circumferential direction of the inner support 31 so that each of the bores 41 is located between two adjacent bores 40.

It should be noted that the opening 42 and the bores 40 and 41 of the inner support 31 are disposed within an area with a smaller diameter than that of the opening 27 of the armature 26.

As is evident from FIG. 2, the hub 48 has a shape of a stepped hollowcylinder. Formed in the hub 48 is an axial bore 49. The axial bore 49 extends along an axis of the hub 48 and passes through the hub 48. As viewed in the axial direction of the hub 48, the axial bore 49 has a female spline 50f in the center thereof, and one end portion of the axial bore 49, which is located on the side of the inner support 31, is formed as a circular recessed area 51. The recessed area 51 has a larger internal diameter than that of the axial bore 49.

A male spline 50m is formed on the one end portion 10 of the rotary shaft 4. The one end portion 10 has a male thread 10a that is formed in an outer circumferential surface thereof so as to extend from the male spline 50m to a tip end of the one end portion 10. When the one end portion 10 of the rotary shaft 4 is inserted into the axial bore 49 of the hub 48 from the other end side thereof, the male spline 50m is engaged with the female spline 50f of the axial bore 49. This allows the hub 48 to rotate integrally with the rotary shaft 4, relative to the circumferential direction of the rotary shaft 4.

When the above-mentioned spline engagement is completed, the male thread 10a of the rotary shaft 4 is located within the recessed area of the hub 48. As illustrated in FIG. 1, a nut 11 is screwed on the male thread 10a, thereby interlocking the hub 48 to the rotary shaft 4.

The hub 48 has a flange 52 located in the one end side of the axial bore 49. The flange 52 is protruding outward in a radial direction of the hub 48. The flange 52 has an external diameter that is slightly smaller than the internal diameter of the opening 27 of the armature 26. Formed in the flange 52 are three screw holes 56, which are distributed on the same circle and arranged at regular intervals in a circumferential direction of the hub 48. The distribution circle of the screw holes 56 has the same diameter as the distribution circle of the bores 40 of the inner support 31. Therefore, as is apparent from FIG. 2, the screw holes 56 can be positioned coaxially with the respective bores 40.

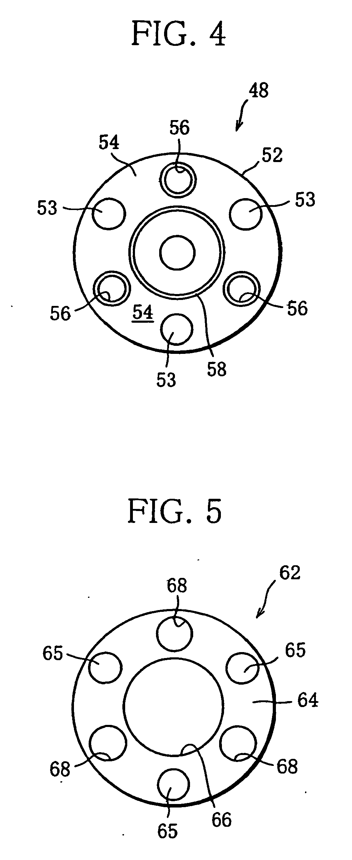

Referring to FIG. 4 for more precision, three circular recesses 53 are formed in the flange 52. The circular recesses 53 correspond to the respective bores 41 of the inner support 31.

As illustrated in FIG. 2, the hub 48 further includes an annular projection 58 in one end face thereof which is located on the flange 52 side. The annular projection 58 has an external diameter slightly smaller than an internal diameter of the opening 42 of the inner support 31. Therefore, as is evident from FIG. 1, the inner support 31 is fitted on the hub 48 in a state where the annular projection 58 is inserted in the opening 42. At this moment, the bores 40 of the inner support 31 coincide with the respective screw holes 56. The annular projection 58 has an internal diameter identical to an internal diameter of the recessed area 51.

At the time of the fixing of the inner support 31 to the hub 48, as is apparent from FIG. 2, a shim 62 is sandwiched between the inner support 31 and the flange 52 of the hub 48. The shim 62 is used to secure the gap L.

To be more concrete, the inner support 31 and the flange 52 of the hub 48 have flat receiving faces 38 and 54, respectively, with respect to the shim 62. The shim 62 is formed into a disc and has substantially the same external diameter as the flange 52 of the hub 48. Both sides of the shim 62 are formed as flat contact faces 64a and 64b to be in close contact with the receiving faces 38 and 54, respectively.

As is obvious from FIG. 5, the shim 62 has an opening 66 located in the center thereof, three bores 68 arranged outside of the opening 66, and three bores 65 each arranged between the respective two adjacent bores 68. The opening 66 is allowed to coincide with the opening 42 of the inner support 31, and the bores 68 and 65 with the respective bores 40 and 41 of the inner support 31.

To mount the clutch mechanism 24 on the rotary shaft 4, the hub 48 is firstly spline-engaged with the one end portion 10 of the rotary shaft 4, and the hub 48 is fixed onto the rotary shaft 4 with the nut 11. After the shim 62 is mounted on the annular projection 58 of the hub 48, the armature 26 and the inner support 31 provided with the spring unit 28 are fixed to the hub 48. As a result, the shim 62 is sandwiched between the inner support 31 and the flange 52 of the hub 48, and the gap L is created due to thickness of the shim 62. Thereafter, as is apparent from FIG. 1, three connecting bolts 46 are screwed into the respective screw holes 56 of the flange 52 through the bores 40 and 68 of the inner support 31 and the shim 62. As a result, the inner support 31 is interlocked with the rotary shaft 4 with the hub 48 intervening therebetween.

In the electromagnetic clutch 14, when the electromagnetic solenoid 22 is supplied with electric power, the electromagnetic solenoid 22 attracts the armature 26 while elastically deforming the spring element 32 of the spring unit 28, thereby frictionally engaging the armature 26 and the rotor 16 with each other. At this point, the rotation of the rotor 16 is transmitted to the rotary shaft 4 through the armature 26, the spring unit 28, the inner support 31, and the hub 48. The rotary shaft 4 then rotates together with the rotor 16 and drives the compression unit 12.

When the electric power supply to the electromagnetic solenoid 22 is stopped, the spring element 32 of the spring unit 28 detaches the armature 26 from the rotor 16 by using a restoring force thereof, thereby securing the gap L between the armature 26 and the rotor 16. In such a resting state of the electromagnetic clutch 14, accordingly, the rotation of the rotor 16 is not transmitted to the rotary shaft 4, which stops the driving of the compression unit 12.

In the compressor according to the first embodiment, the shim 62, that secures the given gap L between the rotor 16 and the armature 26 when the electromagnetic clutch 14 is in the resting state, is sandwiched between the inner support 31 of the clutch mechanism 24 and the hub 48. Consequently, the rotary shaft 4 does not need a stepped face formed by reducing the diameter of the rotary shaft 4 to sandwich a shim between the rotary shaft 4 and the hub 48.

For that reason, when the compressor of the first embodiment uses a CO₂ refrigerant, the rotary shaft 4 can be reduced in diameter regardless of the shim 62, and the sealing performance of the mechanical seal 6 is stably assured for a long term.

Since the shim 62 includes the large contact faces 64a and 64b with respect to the inner support 31 and the hub 48, surface pressure that is applied to the shim 62 is drastically reduced. This also decreases abrasion of the shim 62 which is caused by vibrations of the armature 26. The shim 62 then stably retains the gap L for a long period and assures a stable operation of the electromagnetic clutch 14.

Since the inner support 31 and the hub 48 are connected to each other with the connecting bolts 46, it is easy to achieve a firm engagement between the inner support 31 and the hub 48.

Compressors according to second and third embodiments will be described below. Throughout the description about the compressors according to the second and third embodiments, members and portions identical to those of the compressor of the first embodiment will be referred by identical reference marks, and descriptions thereof will be omitted. Differences from the first embodiment will be explained below.

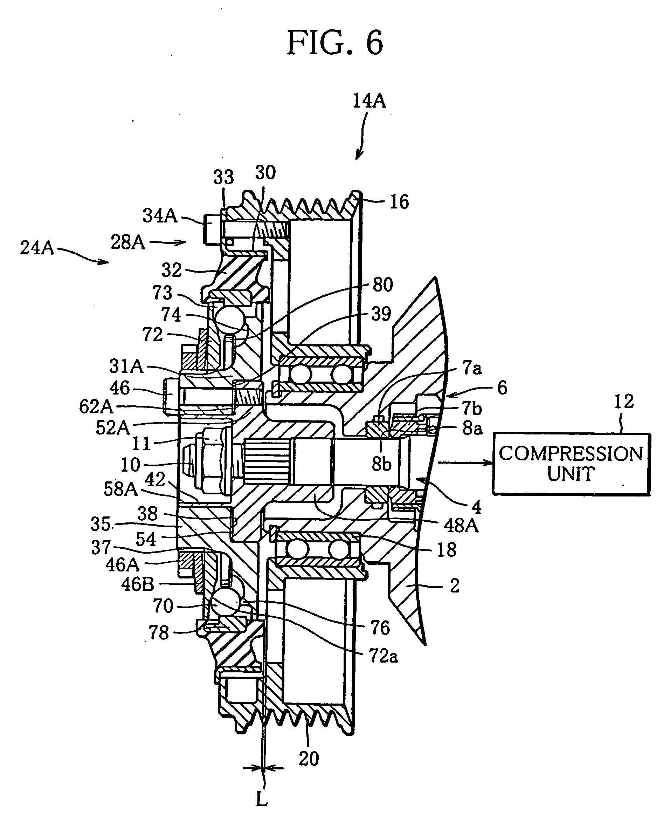

Referring to FIG. 6, the compressor according to the second embodiment has a torque limiter 14A instead of the electromagnetic clutch 14. The torque limiter 14A includes a clutch mechanism 24A that connects the rotor 16 and the rotary shaft 4 to each other.

The clutch mechanism 24A has a spring unit 28A as a first rotation member. The lugs 33 of the spring unit 28A, instead of the rivets 34 of the first embodiment, are fixed to the rotor 16 with bolts 34A.

The spring unit 28A includes an inner ring 78 made of metal. A spring element 32 is sandwiched between the inner ring 78 and the outer ring 30. The spring element 32 is interfitted both in the outer ring 30 and the inner ring 78.

The inner support 31A is disposed in the inside of the inner ring 78. The inner support 31A is not connected to either the inner ring 78 or the spring element 32, thereby being in a state detached from both the inner ring 78 and the spring element 32.

A boss 35 is formed in the center of an outer surface of the inner support 31A. The boss 35 has a male screw 37 in an outer circumferential surface thereof. A circular recessed area 39 is formed in an inner surface of the inner support 31A. The recessed area 39 has an internal diameter and depth that are identical to an external diameter and thickness of a flange 52A of the hub 48A. Therefore, as is evident from FIG. 6, the inner support 31A is fitted to the hub 48A in a state receiving the flange 52A of the hub 48A in the recessed area 39, and is fastened to the hub 48A with a plurality of connecting bolts 46.

An annular projection 58A of the hub 48A extends in an axial direction of the hub 48A and is interfitted in an opening 42 of the boss 35. Disposed between the boss 35 and the spring element 32 is a pressure plate 72. The pressure plate 72 is fastened to the boss 35 with a washer 46B and a nut 46A intervening therebetween, and the nut 46A is screwed on the male thread 37 of the boss 35.

The pressure plate 72 defines an annular accommodation chamber 73 in cooperation with the boss 35, the spring element 32, the inner ring 78 and the inner support 31A. In other words, the accommodation chamber 73 is surrounded by the above-mentioned members 31A, 32, 35 and 78. A plurality of balls 70 are contained in the accommodation chamber 73. The balls 70 have outer surfaces that have been subjected to hardening treatment, and are arranged at regular intervals in a circumferential direction of the inner support 31A.

The pressure plate 72 has a tapered face 72a in an inner surface on the side of the accommodation chamber 73. The tapered face 72a gradually reduces width of the accommodation chamber 73 along an axial direction of the boss 35 toward the boss 35. The inner support 31A has an annular projection 76 and an annular clearance groove 74 in the inner surface on the side of the accommodation chamber 73. The clearance groove 74 is located more inside than the annular projection 76, as viewed in a radial direction of the inner support 31A.

In a state shown in FIG. 6, the balls 70 are held between the tapered face 72a of the pressure plate 72 and the annular projection 76 of the inner support 31A. The balls 70 are also in a state pressed against the inner ring 78 by an urging ring 80 such as a spiral spring. The urging ring 80 is contained in the accommodation chamber 73.

According to the second embodiment, a bottom face of the recessed area 39 in the inner support 31A is formed as the flat receiving face 38. A shim 62A is sandwiched between the receiving face 38 and a receiving face 54 of the hub 48A. The shim 62A adjusts the position of the inner support 31A relative to the axial direction of the rotary shaft 4, secures the given gap L between the spring element 32 and the rotor 16, and prevents the spring element 32 from contacting the rotor 16.

In the compressor according to the second embodiment, when the rotor 16 is supplied with the driving force and is rotated, the rotation of the rotor 16 is transmitted to the hub 48A through the spring element 32, the inner ring 78, the balls 70, the annular projection 76 and the inner support 31A, and is then transmitted from the hub 48A to the rotary shaft 4.

During the rotation of the rotary shaft 4, when load applied to the rotary shaft 4 is increased, and locking tendency or locking occurs on the rotary shaft 4, there causes a great differential between a rotational velocity of the rotor 16 and that of the rotary shaft 4. Such a velocity differential applies great torque to the rotor 16, so that the balls 70 fall into the clearance groove 74 of the inner support 31A by overcoming an urging force of the urging member 80 and friction engagement with respect to the tapered face 72a of the pressure plate 72 and the annular projection 76 of the inner support 31A. As a result, the balls 70 fail to transmit the rotation of the rotor 16 to the inner support 31A, which allows the torque limiter 14B to exhibit its original function.

In the second embodiment, the shim 62A provides the compressor with similar advantages as with the shim 62 of the first embodiment.

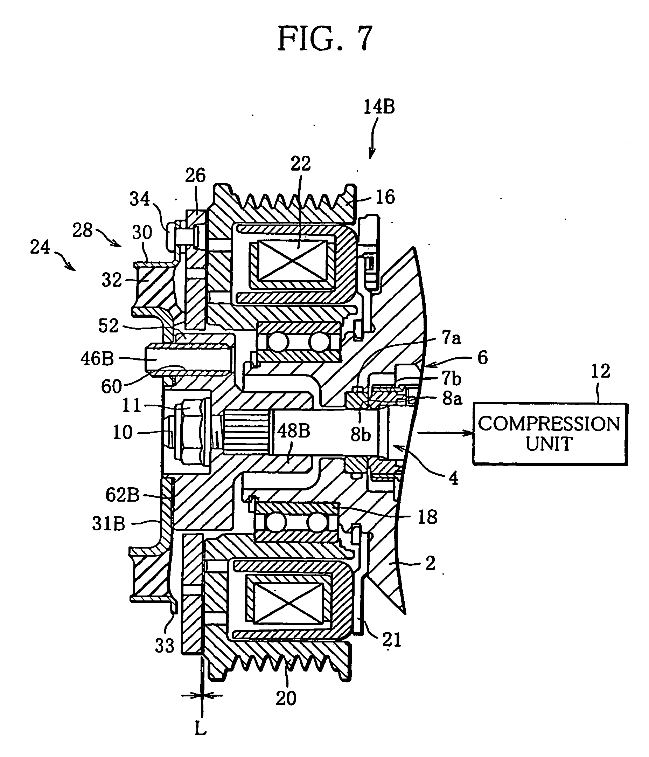

FIGS. 7 to 9 show the compressor according to the third embodiment.

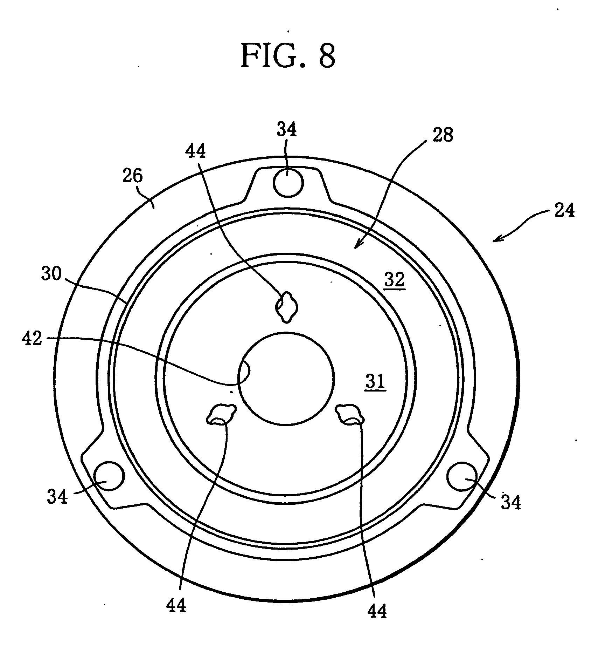

As is obvious from FIG. 7, the compressor of the third embodiment has an electromagnetic clutch 14B. The electromagnetic clutch 14B includes, instead of the connecting bolts 46 of the first embodiment, a plurality of hollow pins 46B for fastening an inner support 31B to a hub 48B. Therefore, as illustrated in FIG. 8, the inner support 31B has bores 44 instead of the bores 40 of the first embodiment, whereas the hub 48B has through holes 60 instead of the screw holes 56 of the first embodiment. A shim 62B has three bores 68B instead of the bores 68 of the first embodiment.

The hollow pins 46B are inserted into the respective through holes 60 of the hub 48B through the bores 44 of the inner support 31B and the bores 68B of the shim 62B, thereby fitting the inner support 31B to the hub 48B.

The shim 62B of the third embodiment also exhibits similar advantages as with the shim 62 of the first embodiment. In the case of the compressor according to the third embodiment, the connection of the inner support 31B and the hub 48B is achieved by insertion of the hollow pins 46B. Therefore, the connection is easy, and also the radial positioning of the inner support 31B in relation to the hub 48B can be carried out with accuracy. Consequently, the compressor is greatly improved in productivity.

The hollow pins 46B are suitable for power transmission from the inner support 31B to the hub 48B. Load, especially a shearing force, applied to the hollow pins 46B is reduced.

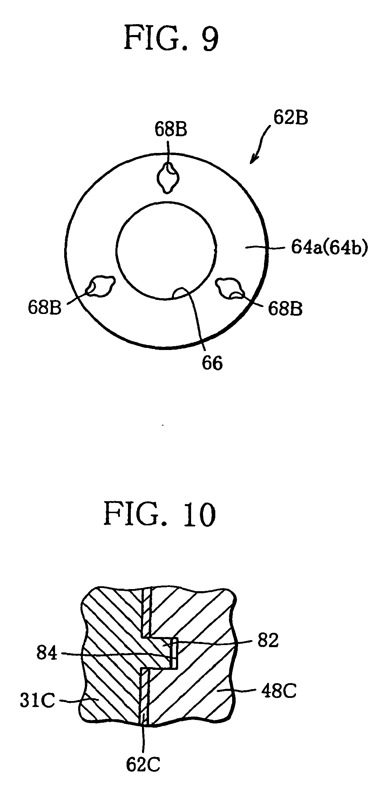

FIG. 10 relates to connection of an inner support 31C and a hub 48C and shows a modification example thereof.

According to the modification example shown in FIG. 10, the inner support 31C integrally includes protruding portions 82, and the hub 48C has recess portions 84 in which the protruding portions 82 are inserted, respectively. Therefore, the inner support 31C and the hub 48C are connected to each other by fitting the protruding portions 82 into the recess portions 84. In this process, the protruding portions 82 penetrate bores of a shim 62C.

The protruding portions 82 and the recess portions 84 form a faucet joint. Such a faucet joint can include the protruding portions 82 formed in the hub 48C and the recess portions 84 formed in the inner support 31C.

The invention is not limited to the compressors according to the first to fourth embodiments.

For instance, the torque limiter may be a notch type including a break-away notch, instead of the ball type shown in FIG. 6. A notch-type torque limiter is broken at a notch when overload is applied to the notch, and breaks power transmission from a rotor to a rotary shaft.

## Claims

1. A compressor comprising:
a housing (2);
a rotary shaft (4) rotatably supported in said housing (2), said rotary shaft (4) having one end protruding from said housing (2);
a compression unit (12) contained in said housing (2), said compression unit (12) performing a sequence of processes, starting with suction of a working fluid, followed by compression and discharge of the working fluid, when driven by said rotary shaft (4);
a shaft sealing unit (6) disposed between said housing (2) and said rotary shaft (4), for airtightly sealing the inside of said housing (2); and
a power transmission device for transmitting a driving force from a driving source (15) to the one end of said rotary shaft (4), wherein
said power transmission device includes:
a rotor (16) rotatably supported by an outer surface of said housing (2) through a bearing (18), for receiving the driving force from the driving source (15);
a hub (48) coupled to the one end of said rotary shaft (4), for rotating with said rotary shaft (4); and
a clutch mechanism (24) for controlling transmission of rotational force from the rotor (16) to the hub (48), the clutch mechanism (24) including a first rotation member (26) disposed adjacent to the rotor (16) in relation to an axial direction of said rotary shaft (4), for receiving the rotational force of the rotor (16), and a second rotation member (31) disposed adjacent to the hub (48) in relation to the axial direction, the second rotation member (31) being coupled to the hub (48) and receiving the rotational force of the first rotation member (26),
**characterized in that** the clutch mechanism (24) further includes
a fastening element (46, 46B, 82) fastening the second rotation member (31) and the hub (48), and
a shim (62, 62A) sandwiched between the second rotation member (31) and the hub (48), the shim (62, 62A) determining a position of the first rotation member (26) with respect to the rotor (16) in the axial direction.

2. The compressor according to claim 1, wherein:
the clutch mechanism is an electromagnetic clutch (14) including an electromagnetic solenoid (22) disposed within the rotor (16), wherein:
the first rotation member (26) of the clutch mechanism (24) includes
an armature (26) for receiving the rotational force of the rotor (16) when the electromagnetic solenoid (22) is in an operating state and the armature (26) is attracted to the rotor (16) by the electromagnetic solenoid (22),
a spring element (32) urges the armature (26) to secure a gap (L) between the rotor (16) and the armature (26) in the axial direction when the electromagnetic solenoid is in a resting state, the spring element (32) being made of synthetic rubber, and
the shim (62) determines a size of the gap (L) through the spring element (32).

3. The compressor according to claim 1, wherein:
the clutch mechanism is a torque limiter (14A) for breaking transmission of the rotational force from the rotor (16) to said rotary shaft (4) when said rotary shaft (4) comes into a locked state,
the first rotation member of the torque limiter (14A) is a spring element (32) connected to the rotor (16), the spring element (32) being made of synthetic rubber, and
the shim (62A) secures a gap (L) between the rotor (16) and the spring element (32) in the axial direction.

4. The compressor according to one of claims 1 to 3, wherein:
the clutch mechanism (24) further includes the fastening element (46, 46B, 82) disposed in either one of the second rotation member (31) and the hub (48), and a receiving element (56, 60, 84) disposed in the other of the second rotation member (31) and the hub (48), for receiving the fastening element to couple the second rotation member (31) and the hub (48) to each other, and
the shim (62A) has a bore (68) into which the fastening element (46, 46B, 82) is inserted.

5. The compressor according to claim 4, wherein:
the fastening element is any one of a bolt (46), a pin (46B), and a protruding portion (82) integrally formed in one or the other of the second rotation member (31C) and the hub (48C).

6. The compressor according to one of claims 1 to 5, wherein:
the working fluid includes CO₂ gas.

## Patentansprüche

1. Kompressor, aufweisend:
ein Gehäuse (2);
eine drehbar in dem Gehäuse (2) gelagerte Rotationswelle (4), wobei die Rotationswelle (4) ein Ende hat, das von dem Gehäuse (2) vorsteht;
eine in dem Gehäuse (2) enthaltene Kompressionseinheit (12), wobei die Kompressionseinheit (12), beginnend mit einem Ansaugen eines Arbeitsfluids, gefolgt on einem Komprimieren und einem Ausstoßen des Arbeitsfluids, eine Folge von Prozessen ausführt, wenn sie durch die Rotationswelle (4) angetrieben wird;
eine zwischen dem Gehäuse (2) und der Rotationswelle (4) angeordnete Wellendichteinheit (6) zum luftdichten Abdichten des Inneren des Gehäuses (2); und
eine Leistungsübertragungsvorrichtung zum Übertragen einer Antriebskraft von einer Antriebsquelle (15) auf das eine Ende der Rotationswelle (4), wobei
die Leistungsübertragungsvorrichtung enthält:
einen durch eine äußere Fläche des Gehäuses (2) durch ein Lager (18) drehbar gelagerten Rotor (16) zum Aufnehmen der Antriebskraft von der Antriebsquelle (15);
eine an das eine Ende der Rotationswelle (4) gekoppelte Nabe (48), um mit der Rotationswelle (4) zu rotieren; und
einen Kupplungsmechanismus (24) zum Steuern einer Übertragung einer Rotationskraft von dem Rotor (16) auf die Nabe (48), wobei der Kupplungsmechanismus (24) ein erstes bezüglich einer axialen Richtung der Rotationswelle (4) zu dem Rotor (16) benachbart angeordnetes Rotationsbauteil (26) zum Aufnehmen der Rotationskraft des Rotors (16) und ein zweites bezüglich der axialen Richtung zu der Nabe (48) benachbart angeordnetes Rotationsbauteil (31) enthält, wobei das zweite Rotationsbauteil (31) an die Nabe (48) gekoppelt ist und die Rotationskraft des ersten Rotationsbauteils (26) aufnimmt,
**dadurch gekennzeichnet, dass**
der Kupplungsmechanismus (24) ferner
ein Befestigungsbauteil (46, 46B, 82), das das zweite Rotationsbauteil (31) und die Nabe (48) befestigt, und
eine zwischen das zweite Rotationsbauteil (31) und die Nabe (48) eingefügte Scheibe (62, 62A) aufweist, wobei die Scheibe (62, 62A) in der axialen Richtung eine Position des ersten Rotationsbauteils (26) bezüglich des Rotors (16) bestimmt.

2. Kompressor gemäß Anspruch 1, wobei:
der Kupplungsmechanismus eine elektromagnetische Kupplung (14) ist, die eine innerhalb des Rotors (16) angeordnete elektromagnetische Spule (22) enthält, wobei:
das erste Rotationsbauteil (26) des Kupplungsmechanismus (24)
einen Anker (26) zum Aufnehmen der Rotationskraft des Rotors (16), wenn die elektromagnetische Spule (22) in einem betriebenen Zustand ist und der Anker (26) durch die elektromagnetische Spule (22) zu dem Rotor (16) angezogen wird, und
ein Federelement (32) enthält, das den Anker (26) drängt, um in der axialen Richtung einen Spalt (L) zwischen dem Rotor (16) und dem Anker (26) sicherzustellen, wenn die elektromagnetische Spule in einem Ruhezustand ist, wobei das Federelement (32) aus einem synthetischen Gummi hergestellt ist, und
die Scheibe (62) eine Größe des Spalts (L) durch das Federelement (32) bestimmt.

3. Kompressor gemäß Anspruch 1, wobei
der Kupplungsmechanismus ein Drehmomentbegrenzer (14A) zum Unterbrechen einer Übertragung der Rotationskraft von dem Rotor (16) zu der Rotationswelle (4), wenn die Rotationswelle (4) in einen arretierten Zustand kommt, ist,
das erste Rotationsbauteil des Drehmomentbegrenzers (14A) ein mit dem Rotor (16) verbundenes Federelement (32) ist, wobei das Federelement (32) aus einem synthetischen Gummi hergestellt ist, und
die Scheibe (62A) in der axialen Richtung einen Spalt (L) zwischen dem Rotor (16) und dem Federelement (32) sicherstellt.

4. Kompressor gemäß einem der Ansprüche 1 bis 3, wobei:
der Kupplungsmechanismus (24) ferner das in einem von beiden, in dem zweiten Rotationsbauteil (31) oder in der Nabe (48), angeordnete Befestigungsbauteil (46, 46B, 82) und ein in dem anderen von dem zweiten Rotationsbauteil (31) und der Nabe (48) angeordnetes Aufnahmebauteil (56, 60, 84) zum Aufnehmen des Befestigungsbauteils enthält, um das Befestigungsbauteil aufzunehmen, um das zweite Rotationsbauteil (31) und die Nabe (48) aneinander zu koppeln, und
die Scheibe (62A) eine Bohrung (68) hat, in die das Befestigungsbauteil (46, 46B, 82) eingebracht ist.

5. Kompressor gemäß Anspruch 4, wobei:
das Befestigungsbauteil eines von einer Schraube (46), einem Stift (46B) und einem vorstehenden Abschnitt (82), der einstückig in einem oder dem anderen von dem zweiten Rotationsbauteil (31C) und der Nabe (48C) gebildet ist, ist.

6. Kompressor gemäß einem der Ansprüche 1 bis 5, wobei:
das Arbeitsfluid CO₂-Gas enthält.

## Revendications

1. Compresseur comprenant :
un carter (2),
un arbre (4) monté rotatif dans ce carter (2), l'une des extrémités de cet arbre rotatif (4) dépassant du carter (2),
une unité de compression (12) renfermée dans le carter (2), cette unité de compression (12) effectuant une série d'étapes de procédé, commençant par l'aspiration d'un fluide de travail suivie par la compression et la détente de ce fluide de travail lorsqu'elle est entrainée par l'arbre rotatif (4),
une unité d'étanchement d'arbre (6) montée entre le carter (2) et l'arbre rotatif (4) pour rendre étanche à l'air la partie interne du boitier (2), et
un dispositif de transmission de puissance pour permettre de transmettre une force d'entrainement provenant d'une source d'entrainement (15) à l'extrémité de l'arbre rotatif (4),
ce dispositif de transmission de puissance comportant :
un rotor (16) supporté en rotation par la surface externe du carter (2) par l'intermédiaire d'un palier (18) pour permettre la réception de la force d'entrainement transmise par la source d'entrainement (15),
un moyeu (48) couplé à l'extrémité de l'arbre rotatif (4) pour permettre sa rotation avec cet arbre (4), et
un mécanisme d'embrayage (24) permettant de commander la transmission de la force de rotation transmise par le rotor (16) au moyeu (48), ce mécanisme d'embrayage (24) comprenant un premier élément de rotation (26) adjacent au rotor (16) par rapport à la direction axiale de l'arbre rotatif (4) pour permettre la réception de la force de rotation du rotor (16), et un second élément de rotation (31) adjacent au moyeu (48) par rapport à la direction axiale, ce second élément de rotation (31) étant couplé au moyeu (48) et recevant la force de rotation du premier élément de rotation (26),
**caractérisé en ce que**
le mécanisme d'embrayage (24) comporte en outre :
un élément de fixation (46, 46b, 82) permettant la fixation du second élément de rotation (31) et du moyeu (48), et
une cale (62, 62a) prise en sandwich entre le second élément de rotation (31) et le moyeu (48), cette cale (62, 62a) déterminant la position du premier élément de rotation (26) par rapport au rotor (16) dans la direction axiale.

2. Compresseur conforme à la revendication 1, dans lequel le mécanisme d'embrayage est un embrayage électromagnétique (14) comprenant un solénoïde électromagnétique (22) monté dans le rotor (16),
le premier élément de rotation (26) du mécanisme d'embrayage (24) comprenant :
une armature (26) pour permettre la réception de la force de rotation du rotor (16) lorsque le solénoïde électromagnétique (22) est à l'état actif et l'armature (26) étant attirée vers le rotor (16) par le solénoïde électromagnétique (22),
un élément à ressort (32) sollicitant l'armature (26) pour garantir un intervalle (L) entre le rotor (16) et l'armature (26) dans la direction axiale lorsque le solénoïde électromagnétique est au repos, cet élément à ressort (32) étant réalisé en caoutchouc synthétique, et
la cale (62) déterminant la dimension de l'intervalle (L) par l'intermédiaire de l'élément à ressort (32).

3. Compresseur conforme à la revendication 1, dans lequel
le mécanisme d'embrayage (24) est un limiteur de couple (14a) permettant d'interrompre la transmission de la force de rotation du rotor (16) à l'arbre rotatif (4) lorsque cet arbre rotatif (4) vient dans une position bloquée,
le premier élément de rotation du limiteur de couple (14a) étant un élément à ressort (32) relié au ressort (16), cet élément à ressort (32) étant réalisé en un caoutchouc synthétique, et
la cale (62a) garantissant un intervalle (L) entre le rotor (16) et l'élément à ressort (32) dans la direction axiale.

4. Compresseur conforme à l'une des revendications 1 à 3, dans lequel le mécanisme d'embrayage (24) comporte en outre l'élément de fixation (46, 46b, 82) monté soit dans le second élément de rotation (31) soit dans le moyeu (48) et un élément de réception (56, 60, 84) monté soit dans le moyeu (48) soit dans le second éléments de rotation (31) pour permettre la réception de l'élément de fixation de façon à permettre à coupler le second élément de rotation (31) et le moyeu (48), et
la cale (62a) comporte un perçage (68) dans lequel est inséré l'élément de fixation (46, 46b, 82).

5. Compresseur conforme à la revendication 4, dans lequel :
l'élément de fixation (46) est soit un boulon, soit une cheville (46b), soit une partie en saillie (82) formée intégralement soit dans le second élément de rotation (31c) soit dans le moyeu (48c).

6. Compresseur conforme à l'une des revendications 1 à 5, dans lequel :
le fluide de travail renferme du CO₂ gazeux.
